# EUROPEAN PATENT APPLICATION

(11) **EP 4 468 750 A1**
(43) Date of publication of application: **27.11.2024**
(21) Application number: 22936367.6
(22) Date of filing: 11.11.2022
(51) Int. Cl.: H04W 4/02, H04W 56/00, H04B 1/7183

(54) **TIME-FREQUENCY SYNCHRONIZATION-BASED POSITIONING METHOD AND APPARATUS**

(30) Priority: 08.04.2022 CN 202210370108; 31.08.2022 CN 202211055340
(71) Applicant: Huawei Technologies Co., Ltd., Shenzhen, Guangdong 518129 (CN)
(72) Inventor: XIE, Zichen, Shenzhen, Guangdong 518129 (CN); GUO, Zhan, Shenzhen, Guangdong 518129 (CN); LI, Weihua, Shenzhen, Guangdong 518129 (CN)
(74) Representative: Grünecker Patent- und Rechtsanwälte PartG mbB
(86) International application number: PCT/CN2022/131479
(87) International publication number: WO 2023/193439

(57) **Abstract**

Embodiments of this application provide a time frequency synchronization-based positioning method and apparatus, and relate to the field of communication technologies, to perform time-frequency synchronization via a narrowband system, and reach time-frequency synchronization precision required for UWB high-precision positioning, thereby greatly reducing, without losing UWB positioning precision, areas and power consumption of a positioning end and a positioned end using UWB. A specific solution is as follows: A first device completes time-frequency synchronization with a second device via a narrowband system, to obtain time-frequency synchronization information. The first device performs ranging and/or positioning between the first device and the second device via a wideband system when the first device determines, at a MAC layer, that the time-frequency synchronization information reaches time-frequency precision required by the wideband system. The first device exchanges a ranging and/or positioning result with the second device via the narrowband system. Embodiments of this application are used in time-frequency synchronization and positioning processes.

## Description

This application claims priorities to Chinese Patent Application No. 202210370108.4, filed with the China National Intellectual Property Administration on April 8, 2022 and entitled "METHOD AND APPARATUS FOR PROVIDING LOW-POWER-CONSUMPTION SYNCHRONIZATION FOR HIGH-PRECISION POSITIONING", and
to Chinese Patent Application No. 202211055340.5, filed with the China National Intellectual Property Administration on August 31, 2022 and entitled "TIME FREQUENCY SYNCHRONIZATION-BASED POSITIONING METHOD AND APPARATUS", both of which are incorporated herein by reference in their entireties.

### TECHNICAL FIELD

Embodiments of this application relate to the field of communication technologies, and in particular, to a time frequency synchronization-based positioning method and apparatus.

### BACKGROUND

Ultra-wideband (Ultra-WideBand, UWB) is mainly for positioning, and has high power consumption and costs. To address high power consumption of the UWB, a combination of Bluetooth low energy (Bluetooth Low Energy, BLE) and UWB or a combination of wireless fidelity (Wi-Fi) and UWB is generally used for products.

In the two combinations, a positioning end and a positioned end may interact with each other through the BLE/Wi-Fi, and perform searching, discovery, and connection, to determine parameters such as ranging/positioning time and a ranging/positioning manner, and determine rough start time for initiating positioning. Then, the positioning end and the positioned end may perform higher-precision time-frequency synchronization by using the UWB, to perform high-precision ranging/positioning. In this procedure, operating time of the UWB can be greatly reduced. Then, the positioning end and the positioned end perform a positioning procedure by using the UWB. However, currently, such an operation of performing signaling interaction and high-precision time-frequency synchronization by using the UWB consumes a large amount of power consumption, and also occupies large component areas of the positioning end and the positioned end to implement functions of the operation.

### SUMMARY

Embodiments of this application provide a time frequency synchronization-based positioning method and apparatus, to perform time-frequency synchronization via a narrowband system, and reach time-frequency synchronization precision required for UWB high-precision positioning, thereby greatly reducing, without losing UWB positioning precision, areas and power consumption of a positioning end and a positioned end using UWB.

To achieve the foregoing objective, the following technical solutions are used in embodiments of this application.

According to a first aspect, a time frequency synchronization-based positioning method is provided, including: A first device completes time-frequency synchronization with a second device via a narrowband system, to obtain time-frequency synchronization information; the first device performs positioning between the first device and the second device via a wideband system when the first device determines, at a media access control MAC layer, that the time-frequency synchronization information reaches time-frequency precision required by the wideband system; and the first device exchanges a positioning result with the second device via the narrowband system.

The first device may be, for example, a positioning end, and the second device is a positioned end.

Therefore, in this application, time-frequency synchronization between the first device and the second device may be completed via the narrowband system. For example, the narrowband system is BLE/Wi-Fi, and the wideband system is UWB. In this application, signaling interaction and fine synchronization are performed via the narrowband system, to obtain the time-frequency synchronization information, and after time-frequency synchronization precision is determined at MAC layers of the first device and the second device, ranging and/or positioning may be synchronously started at wideband systems of the two ends. In this way, in this application, when time-frequency synchronization interaction between the two ends is performed via the narrowband system and synchronization precision of the wideband system is reached, an area and power consumption of the wideband system can be greatly reduced without losing the time-frequency precision required by the wideband system for ranging/positioning.

In a possible design, that a first device completes time-frequency synchronization with a second device via a narrowband system, to obtain time-frequency synchronization information includes: The first device sends a broadcast message to the second device via the narrowband system, where the broadcast message includes a connection, in the narrowband system, established between the first device and the second device; and the first device performs monophonic synchronization with the second device via the narrowband system, to obtain time-frequency synchronization information of coarse synchronization between the first device and the second device.

This design may be understood as performing time-frequency synchronization based on a positioning scenario in which the first device establishes the connection to the second device. On the basis of establishing the connection in the narrowband system, coarse synchronization is performed via the narrowband system, and then fine synchronization is performed via the wideband system. Generally, in the wideband system, coarse synchronization meets requirements of fine synchronization by default. Therefore, in this application, it is equivalent to that time-frequency synchronization between the first device and the second device is completed via the narrowband system, and an area and power consumption of the wideband system for time-frequency synchronization can be greatly reduced.

In a possible design, that a first device completes time-frequency synchronization with a second device via a narrowband system, to obtain time-frequency synchronization information includes: The first device sends a first broadcast message to the second device via the narrowband system, where the first broadcast message includes basic information required for time-frequency synchronization; the first device starts monophonic synchronization in the narrowband system based on the basic information, to obtain time-frequency synchronization information of coarse synchronization between the first device and the second device; and the first device receives a second broadcast message sent by the second device, where the second broadcast message includes time-frequency synchronization information of coarse synchronization of the second device.

This design is in a non-connection positioning-based scenario in which the first device and the second device are located. In this design, the first device may send a broadcast message to the second device via the narrowband system. After the first device and the second device perform monophonic synchronization, the second device broadcasts to the positioning end, to indicate the time-frequency synchronization information. Further, the first device and the second device may perform fine synchronization via the wideband system. Generally, in the wideband system, coarse synchronization meets requirements of fine synchronization by default. Therefore, in this application, it is equivalent to that time-frequency synchronization between the two ends is completed via the narrowband system, and an area and power consumption of the wideband system for time-frequency synchronization can be greatly reduced.

In a possible design, that a first device completes time-frequency synchronization with a second device via a narrowband system, to obtain time-frequency synchronization information includes: The first device sends a first broadcast message to a plurality of second devices via the narrowband system, where the first broadcast message includes basic information required for time-frequency synchronization; the first device starts monophonic synchronization in the narrowband system based on the basic information, to complete time-frequency synchronization, and obtain time-frequency synchronization information of coarse synchronization between the first device and the second devices; and the first device sequentially receives second broadcast messages sent by the plurality of second devices, where the second broadcast message sent by each of the plurality of second devices includes time-frequency synchronization information of coarse synchronization of the second device.

This design is non-connection positioning-based time-frequency synchronization, and is in a broadcast-based scenario in which one first device corresponds to a plurality of second devices. In this scenario, a one-to-many procedure is similar to a one-to-one procedure, except that a plurality of devices are used for concurrent synchronization and concurrent ranging. A difference lies in that, in a multi-device reply procedure, the multi-device reply is performed in sequence based on parameters in a broadcast sent by the first device. Therefore, in this scenario, time-frequency synchronization between the first device and the second device may also be completed via the narrowband system, and an area and power consumption of the wideband system for time-frequency synchronization can be greatly reduced.

In a possible design, before that the first device determines, at a media access control MAC layer, that the time-frequency synchronization information reaches time-frequency precision required by a wideband system, the method further includes: The first device continues, based on the time-frequency synchronization information of coarse synchronization, to perform time-frequency synchronization with the second device via the wideband system, to obtain time-frequency synchronization information of fine synchronization between the first device and the second device.

As described above, the time-frequency synchronization information of coarse synchronization may be the time-frequency synchronization information of fine synchronization by default. This is equivalent to that time-frequency synchronization is completed via the narrowband system, and can reduce the area and power consumption of the wideband system for time-frequency synchronization.

In a possible design, both the first device and the second device include the MAC layer, a SUB-MAC layer of the wideband system, and a SUB-MAC layer of the narrowband system.

That a first device completes time-frequency synchronization with a second device via a narrowband system includes: The first device completes time-frequency synchronization with the second device via the SUB-MAC layer of the narrowband system.

In addition, the first device may perform positioning via the SUB-MAC layer of the wideband system, and the first device performs interaction of the positioning result via the SUB-MAC layer of the narrowband system.

For example, in this application, the first device and the second device may send a communication frame and a synchronization frame via the SUB-MAC layer of the narrowband system to complete time-frequency synchronization, then complete ranging and/or positioning via the SUB-MAC layer of the wideband system, and finally perform interaction of the positioning result via the SUB-MAC layer of the narrowband system. In this way, for the first device and the second device, time-frequency synchronization is completed via the SUB-MAC layer of the narrowband system, and power consumption and areas of the first device and the second device can be reduced.

In a possible design, that the first device performs positioning between the first device and the second device via a wideband system when the first device determines, at a media access control MAC layer, that the time-frequency synchronization information reaches time-frequency precision required by the wideband system includes: When the first device determines, at the MAC layer, that the time-frequency synchronization information of fine synchronization reaches the time-frequency precision required by the wideband system, at a moment for starting positioning, the SUB-MAC layer of the wideband system in the first device sends a ranging request to the SUB-MAC layer of the wideband system in the second device, where the ranging request is used to request the SUB-MAC layer of the wideband system in the second device to perform positioning. The SUB-MAC layer of the wideband system in the first device receives a ranging response of the SUB-MAC layer of the wideband system in the second device.

The SUB-MAC layer of the wideband system in the second device may determine the positioning result based on the ranging request and the ranging response, and send the positioning result to the MAC layer of the second device. That is, in this application, after time-frequency synchronization at the SUB-MAC layer of the narrowband system reaches a synchronization requirement of the wideband system, positioning between the two ends may be performed via the SUB-MAC layer of the wideband system. This can greatly reduce the area and power consumption of the wideband system for time-frequency synchronization.

In a possible design, that the first device and the second device perform interaction of a ranging and/or positioning result via the narrowband system includes: The SUB-MAC layer of the narrowband system in the first device receives the positioning result sent by the SUB-MAC layer of the narrowband system in the second device; and the SUB-MAC layer of the narrowband system in the first device sends the positioning result to the MAC layer of the first device.

That is, after the two ends perform ranging via the wideband system, and the second device obtains the positioning result, the second device may transmit the positioning result to the first device via the SUB-MAC layer of the narrowband system. That is, interaction of a final result is performed via the SUB-MAC layer of the narrowband system.

According to a second aspect, a positioning apparatus is provided, where the positioning apparatus is used in a first device, and the positioning apparatus includes: a synchronization unit, configured to complete time-frequency synchronization with a second device via a narrowband system, to obtain time-frequency synchronization information; a ranging unit, configured to: when it is determined, at a media access control MAC layer, that the time-frequency synchronization information reaches time-frequency precision required by a wideband system, perform positioning between the first device and the second device via the wideband system; and an exchange unit, configured to exchange a positioning result with the second device via the narrowband system.

For beneficial effect of the second aspect, refer to the description of the first aspect.

In a possible design, the synchronization unit is configured to: send a broadcast message to the second device via the narrowband system, where the broadcast message includes a connection to the second device established in the narrowband system; and perform monophonic synchronization with the narrowband system of the second device, to obtain time-frequency synchronization information of coarse synchronization between the first device and the second device.

In a possible design, the synchronization unit is configured to: send a first broadcast message to the second device via the narrowband system, where the first broadcast message includes basic information required for time-frequency synchronization; start, in the narrowband system, monophonic synchronization with the second device based on the basic information, to obtain time-frequency synchronization information of coarse synchronization between the first device and the second device; and receive a second broadcast message sent by the second device, where the second broadcast message includes time-frequency synchronization information of coarse synchronization of the second device.

In a possible design, the synchronization unit is configured to: send a first broadcast message to a plurality of second devices via the narrowband system, where the first broadcast message includes basic information required for time-frequency synchronization; start, in the narrowband system, monophonic synchronization with the plurality of second devices based on the basic information, to complete time-frequency synchronization, and obtain time-frequency synchronization information of coarse synchronization between the first device and the plurality of second devices; and sequentially receive, in the narrowband system, second broadcast messages sent by the plurality of second devices, where the second broadcast message sent by each of the plurality of second devices includes time-frequency synchronization information of coarse synchronization of the second device.

In a possible design, the synchronization unit is further configured to: continue, based on the time-frequency synchronization information of coarse synchronization, to perform time-frequency synchronization with the second device via the wideband system, to obtain time-frequency synchronization information of fine synchronization between the first device and the second device.

In a possible design, both the first device and the second device include the MAC layer, a SUB-MAC layer of the wideband system, and a SUB-MAC layer of the narrowband system; and the synchronization unit is configured to complete time-frequency synchronization with the second device via the SUB-MAC layer of the narrowband system.

In a possible design, the ranging unit is configured to: when it is determined, at the MAC layer, that the time-frequency synchronization information of fine synchronization reaches the time-frequency precision required by the wideband system, at a moment for starting positioning, send, at the SUB-MAC layer of the wideband system, a ranging request to the SUB-MAC layer of the wideband system in the second device, where the ranging request is used to request the SUB-MAC layer of the wideband system in the second device to perform positioning; and receive, at the SUB-MAC layer of the wideband system, a ranging response of the SUB-MAC layer of the wideband system in the second device.

In a possible design, the exchange unit is configured to: receive, at the SUB-MAC layer of the narrowband system, a ranging result and/or the positioning result sent by the SUB-MAC layer of the narrowband system in the second device; and send, at the SUB-MAC layer of the narrowband system, the ranging result and/or the positioning result to the MAC layer of the first device.

According to a third aspect, a communication apparatus is provided, including at least one processor, where the at least one processor is connected to a memory, and the at least one processor is configured to read and execute a program stored in the memory, to enable the apparatus to perform the method according to the first aspect or any one of the possible designs of the first aspect.

According to a fourth aspect, a chip is provided, where the chip is coupled to a memory, and is configured to read and execute program instructions stored in the memory, to implement the method according to the first aspect or any one of the possible designs of the first aspect.

According to a fifth aspect, a time frequency synchronization-based positioning apparatus is provided, where the positioning apparatus includes a memory and a processor. The memory is coupled to the processor. The memory is configured to store computer program code. The computer program code includes computer instructions. A transceiver is configured to: receive and send data. When the processor executes the computer instruction, the positioning apparatus is enabled to perform the scenario-based positioning method according to the first aspect or any one of the corresponding possible designs of the first aspect.

According to a sixth aspect, an embodiment of this application provides a time frequency synchronization-based positioning apparatus. The apparatus is included in an electronic device, and the apparatus has a function of implementing behavior of the electronic device according to any one of the foregoing aspects and any one of the possible implementations. The function may be implemented by hardware, or may be implemented by hardware executing corresponding software. The hardware or the software includes one or more modules or units corresponding to the foregoing function, for example, a synchronization module or unit, a positioning module or unit, and an interaction module or unit.

According to a seventh aspect, an embodiment of this application provides a communication system, including the positioning end and the positioned end according to any one of the foregoing aspects and any one of the possible implementations, and configured to implement the method according to the first aspect or any one of the possible designs of the first aspect.

According to an eighth aspect, a computer-readable storage medium is provided, including computer instructions. When the computer instructions are run on an electronic device, the electronic device is enabled to perform the method according to the first aspect or any one of the possible designs of the first aspect.

According to a ninth aspect, a computer program product is provided. When the computer program product runs on a computer or a processor, the computer or the processor is enabled to perform the method according to the first aspect and any one of the possible designs of the first aspect.

It may be understood that any one of the first device, the second device, the positioning apparatus, the chip, the computer-readable storage medium, the computer program product, or the like provided above may be applied to the corresponding method provided above. Therefore, for beneficial effect that can be achieved by the first device, the second device, the positioning apparatus, the chip, the computer-readable storage medium, the computer program product, or the like, refer to beneficial effect in the corresponding method. Details are not described herein again.

These aspects or other aspects in this application are more concise and comprehensible in the following description.

### BRIEF DESCRIPTION OF DRAWINGS

FIG. 1 is a diagram of a signal procedure for performing precise ranging based on ToF in a UWB-based positioning method according to an embodiment of this application;
FIG. 2 is a diagram of a network architecture according to an embodiment of this application;
FIG. 3 is a diagram of a coexistence architecture of wideband system positioning and narrowband system communication according to an embodiment of this application;
FIG. 4 is a diagram of data frames of a wideband system and a narrowband system according to an embodiment of this application;
FIG. 5 is a schematic flowchart of a time frequency synchronization-based positioning method according to an embodiment of this application;
FIG. 6 is a schematic flowchart of a time frequency synchronization-based positioning method according to an embodiment of this application;
FIG. 7 is a diagram of a signal procedure of time frequency synchronization-based positioning according to an embodiment of this application;
FIG. 8 is a schematic flowchart of a time frequency synchronization-based positioning method according to an embodiment of this application;
FIG. 9 is a diagram of a signal procedure of time frequency synchronization-based positioning according to an embodiment of this application;
FIG. 10 is a schematic flowchart of a time frequency synchronization-based positioning method according to an embodiment of this application;
FIG. 11A and FIG. 11B are a diagram of a signal procedure of time frequency synchronization-based positioning according to an embodiment of this application;
FIG. 12 is a diagram of a structure of a ranging/positioning device according to an embodiment of this application; and
FIG. 13 is a diagram of a structure of a positioning end/positioned end according to an embodiment of this application.

### DESCRIPTION OF EMBODIMENTS

For ease of understanding, some concepts related to embodiments of this application are described for reference by using examples. Details are described below.

BLE: A Bluetooth low energy technology is a low-cost, short-distance, and interoperable robust wireless technology, and has multiple versions of protocols, such as BLE4.0, BLE4.1, BLE4.2, and BLE5.0.

UWB: The UWB is a wireless carrier communication technology and uses nanosecond-to-microsecond level non-sine wave narrow pulses to transmit data. The UWB can be used for high-speed data transmission at a short distance, and sub-nanosecond level ultra-narrow pulses of the UWB can also be used for precise indoor positioning at a short distance. The UWB has many advantages such as strong anti-interference performance, a high transmission rate, extremely large bandwidth, low power consumption, and low transmit power, and is mainly applied to fields such as indoor communication, a high-speed wireless local area network (Local Area Network, LAN), a home network, a cordless telephone, security detection, location determination, and radar.

The following describes technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

Terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the description of embodiments, unless otherwise specified, "a plurality of" means two or more.

In many indoor positioning technologies, positioning precision of Wi-Fi and BLE is 1 m/30°, and positioning precision of UWB is 0.1 m/3°. Compared with Wi-Fi and BLE, the UWB has advantages such as higher positioning precision, better anti-multipath effect (avoiding impact of multipath), and higher security. However, the UWB has disadvantages such as high power consumption and high costs. Table 1 shows performance comparison among Wi-Fi, BLE, and UWB.

**Table 1**

| Technology path | BLE | Wi-Fi | UWB |
|---|---|---|---|
| Frequency | 2.4 GHz | 2.4 GHz, and 5.8 GHz | 3.5 GHz to10 GHz |
| Function | Ranging (phase)/AoA | Ranging (ToF)/AoA | Ranging (ToF)/AoA |
| Precision (line of sight) | 1 m/30° | 1 m/30° | 0.1 m/3° |
| Coverage area | 100 m | 100 m | 50 m |
| Power consumption | Low | Medium | High |
| Costs | Low | Low | High |
| Advantage | Small size and low power consumption | Easy expansion | High security and precision |
| Disadvantage | Susceptible to an ambient environment and low precision | Susceptible to an ambient environment and low precision | High power consumption, high costs, and obvious signal attenuation due to environment impact |

The AoA in Table 1 is a positioning technology.

The UWB is mainly or positioning, but it can be learned from Table 1 that power consumption and costs of UWB are relatively high. However, not all power consumption and costs of UWB are for positioning, and a large part is for communication. When the UWB is for positioning, from a perspective of an implementation in which the UWB is for positioning, a large part is also for synchronization between time domain and frequency domain. In some embodiments, through analysis of UWB media access control (Media Access Control, MAC) logic, it can be found that an area of UWB CBB (digital logic part) is about 1.5 to 2 times that of UWB radio frequency (Radio Frequency, RF), and half of the area of the UWB CBB is for synchronization, that is, about 70% of power consumption in the UWB CBB is for synchronization.

To address high power consumption of the UWB, a combination of BLE and UWB or a combination of Wi-Fi and UWB is generally used for products. In these combinations, a positioning end and a positioned end may perform processes such as searching, discovery, and connection through the BLE/Wi-Fi, to determine parameters such as ranging/positioning time and a ranging/positioning manner, and determine rough (us-ms level) start time for initiating ranging/positioning. Then, the positioning end and the positioned end perform higher-precision time-frequency synchronization by using the UWB, to perform high-precision ranging/positioning. It can be learned from the procedure that, time-consuming processes such as searching, discovery, information interaction and coarse synchronization are performed through the BLE/Wi-Fi with lower power consumption. This can greatly reduce operating time of the UWB.

The UWB-based positioning procedure includes: first performing interaction in a signaling frame manner, and determining parameters such as a precise time (100 ns-level) for starting positioning and a used positioning mode. Then, ranging/positioning is performed according to a time of flight (Time of Flight, ToF) principle.

Specifically, the UWB usually uses a high rate pulse (High Rate Pulse, HRP) UWB PHY frame to transmit a payload, namely, data or signaling. For a basic format, refer to Table 2. The HRP UWB PHY frame includes a synchronization (SYNC) field, a start frame delimiter (Start Frame Delimiter, SFD), a physical layer (physical layer, PHY) header, and a physical layer PHY payload.

**Table 2**

| | | | |
|---|---|---|---|
| SYNC | SFD | PHY header | PHY payload |

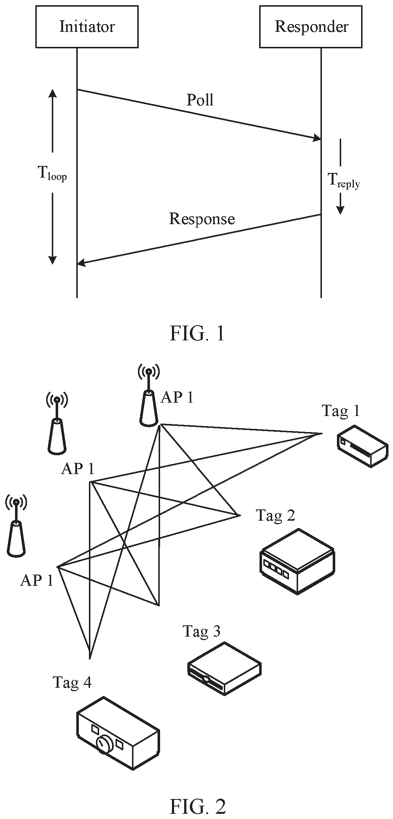

The UWB-based positioning method is to perform precise ranging based on ToF, as shown in FIG. 1. An initiator (Initiator) may send a Poll message to a responder (Responder), and the responder may return a response (Response) message to the initiator. An interval between time when the initiator sends the Poll message and time when the initiator receives the Response message is denoted as Tₗₒₒₚ, and an interval between time when the responder receives the Poll message and time when the responder sends the Response message is denoted as T_{reply}.

In this way, ToF=(Tₗₒₒₚ-T_{reply})/2.

On the basis of the ToF, an improved UWB positioning algorithm further includes a time difference of arrival (Time Difference of Arrival, TDOA), time of arrival (time of arrival, TOA), two-way ranging (Two Way Ranging, TWR), and the like, and can further improve positioning performance.

It can be learned that, currently, although signaling interaction and fine synchronization can be performed by using the UWB, these signaling interaction and fine synchronization processes consume a large amount of power consumption, and occupy a large area of the UWB CBB for implementation. Although a narrowband (BLE/Wi-Fi) frame can alternatively provide a time-frequency synchronization function, time-frequency precision required for the UWB positioning cannot be met.

Therefore, this application provides a narrowband technology-based time-frequency synchronization improvement method, and is applied to a ranging/positioning scenario. In this application, time-frequency synchronization precision required for UWB high-precision positioning can be reached by using the narrowband technology, thereby greatly reducing an area and power consumption of the UWB without losing UWB positioning precision.

A network architecture in this application may include a first device and a second device. The first device is, for example, a positioning end, and the second device is a positioned end.

Usually, a plurality of positioning ends may correspond to a plurality of positioned ends. Any one of the plurality of positioning ends may alternatively position the plurality of positioned ends. Any one of the plurality of positioned ends may alternatively be positioned by the plurality of positioning ends.

In some embodiments, the positioning end may be generally an access point (Access Point, AP), and the positioned end may be generally a tag tag. As shown in FIG. 2, an AP 1, an AP 2, and an AP 3 are positioning ends, and a tag 1, a tag 2, a tag 3, and a tag 4 are positioned ends.

For example, in Wi-Fi, the tag may be understood as a signal generator of a wireless positioning system produced by a manufacturer, and is usually placed or pasted on an object to be ranged/positioned. As a source device to be positioned, the tag periodically sends a radio frequency signal to surroundings.

The AP receives ranging/positioning information sent by the tag and forwards the information to an access controller (Access Controller, AC) or directly forwards the information to a positioning server.

The AC is configured to forward configuration instructions of the positioning server to the AP. The AC can also function as a relay station, so that the AP can report the received ranging/positioning information to the AC, and then the AC forwards the information to the positioning server. After receiving the ranging/positioning information, the positioning server runs a positioning algorithm to calculate a tag location and provides calculated data to a user or system. The user or system can be a tag, user device, or AP. To precisely determine the tag location, for each tag, the positioning server usually needs to receive the ranging/positioning information from at least three APs for calculation.

For example, Wi-Fi tag ranging/positioning may be applied to industries such as healthcare, oil, gas, and mining. To monitor and position key device assets and personnel security, users can deploy Wi-Fi tags on target objects (such as key assets and personnel) and use a tag positioning technology to position key assets and personnel. This helps enterprises improve security and efficiency.

Similarly, BLE tag ranging/positioning mainly includes a plurality of BLE tags, a plurality of APs with built-in BLE modules, at least one AC, a positioning server, and a management system. For example, the management system may obtain BLE tag ranging/positioning information from the positioning server, analyze and collect statistics on the BLE tag ranging/positioning information, and manage an asset carrying the BLE tag and a visitor.

For example, BLE tag ranging/positioning may be applied to places such as a school, a warehouse, a hospital, and an enterprise. The AP provides a WLAN access, and works with the positioning server via the built-in BLE module to provide Bluetooth tag ranging/positioning functions for positioning key device assets and personnel.

A UWB ranging/positioning technology is a technology mainly used for positioning personnel or materials in indoor space. A feature of the ranging/positioning technology is that positioning precision can be within one meter. A ranging/positioning principle is that a specific quantity of UWB LOC base stations are installed in the indoor space to implement precise ranging/positioning of the personnel or the materials according to a triangular positioning principle.

For example, the UWB ranging/positioning technology can perform precise real-time positioning on personnel and integrate functions such as risk control, video linkage, historical trajectory playback, personnel management, a geofence, behavior monitoring, and emergency rescue.

Embodiments of this application may also be applied to the foregoing ranging/positioning scenario. A difference lies in that in this application, a narrowband system (such as BLE/Wi-Fi) and a wideband system (UWB) may be combined, and initial time and frequency synchronization is mainly performed on a UWB PHY frame via a narrowband frame, to reduce functions of the UWB used for time and frequency synchronization, and reduce power consumption and an area of the UWB.

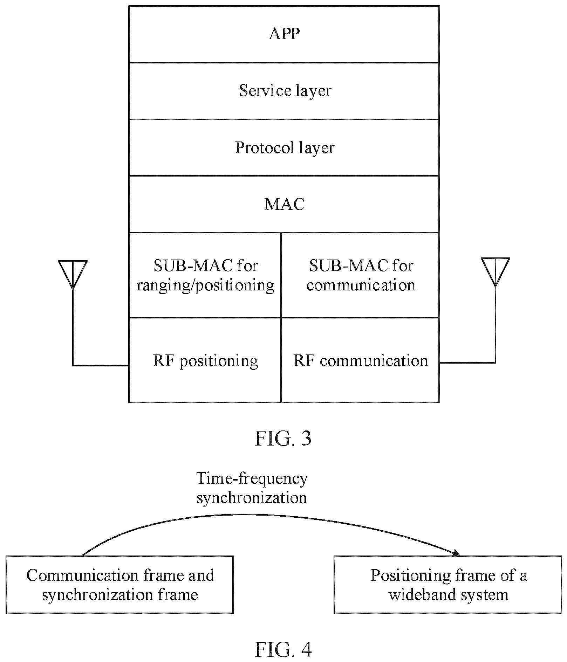

In terms of an implementation architecture, in this application, an overall architecture may be used in a manner in which RF and SUB-MAC for wideband system positioning are separated from RF and SUB-MAC for narrowband system communication, and data transmission, service instruction summarization, and allocation scheduling are performed at a MAC layer in a unified manner. FIG. 3 is a diagram of a coexistence architecture of wideband system positioning and narrowband system communication, and the coexistence architecture is applicable to both a positioning end and a positioned end.

For the positioning end and the positioned end, a positioning instruction delivered by an application (Application, APP) layer is invisible to a layer below a MAC layer. That is, the application layer may transmit the positioning instruction to the MAC layer through a service (Service) layer and a protocol (Stack) layer, and the MAC layer does not continue to deliver the positioning instruction. When the MAC layer receives a positioning instruction or a communication instruction from an upper layer, if there are a plurality of positioning instructions or communication instructions, the MAC layer may sequentially deliver the positioning instructions or communication instructions to different SUB-MAC for processing, and perform corresponding operations based on feedback. That is, the positioning instruction may be sent to the SUB-MAC for ranging/positioning, and the communication instruction may be sent to the SUB-MAC for communication. For example, the communication instruction is an instruction for processes such as searching, discovery, time-frequency synchronization, and ranging result transmission.

In this application, in addition to being responsible for searching, discovery, time-frequency synchronization, and ranging results, the communication part may further provide a frame header-level synchronization capability (a synchronization receiving capability at a time point at which a frame header is located) for the positioning part.

In this application, the positioning instruction may be sent via a positioning radio frequency (Radio Frequency, RF) module, and the communication instruction may be sent via communication RF.

In some embodiments, the RF positioning and the SUB-MAC for ranging/positioning may belong to a wideband system, such as the UWB. The RF communication and the SUB-MAC for communication may belong to a narrowband system, such as BLE and Wi-Fi.

In some embodiments of this application, time-frequency synchronization of positioning in the wideband system may be completed via a communication frame and a synchronization frame in the narrowband system, and then ranging/positioning is performed via a positioning frame in the wideband system. For a corresponding figure, refer to FIG. 4.

In some embodiments, the communication frame and the synchronization frame are sent in a plurality of scenarios, for example, a connection-based positioning scenario, a non connection-based positioning scenario, and a positioning scenario based on one-to-many broadcast. Details are described below.

The following describes embodiments of this application.

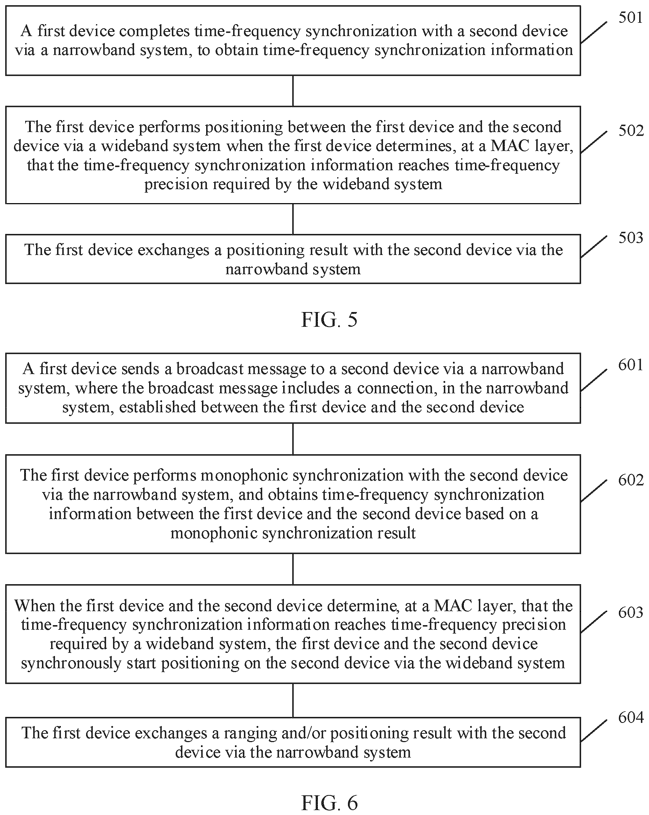

An embodiment of this application provides a time frequency synchronization-based positioning method. As shown in FIG. 5, the method includes the following steps.

501: A first device completes time-frequency synchronization with a second device via a narrowband system, to obtain time-frequency synchronization information.

The first device is, for example, a positioning end, and the second device is, for example, a positioned end. The positioning end is, for example, an AP, and the positioned end is, for example, a tag.

The narrowband system (a low power consumption system) in this application is not always a specific technology, provided that time-frequency synchronization precision can be met, for example, BLE or Wi-Fi. Specifically, a time-frequency synchronization process may be completed via a communication frame and a synchronization frame in the narrowband system. The communication frame and the synchronization frame may be delivered, through an application layer of the narrowband system, to a MAC layer of the narrowband system, SUB - MAC for communication, and RF communication for sending.

In some embodiments, the positioning end and the positioned end complete time-frequency synchronization via the SUB-MAC layer of the narrowband system.

502: The first device performs positioning between the first device and the second device via a wideband system when the first device determines, at the MAC layer, that the time-frequency synchronization information reaches time-frequency precision required by the wideband system.

For example, when the positioning end interacts with the positioned end via the narrowband system, to enable the two ends to obtain the time-frequency synchronization information at the MAC layer, and the two ends determine that the time-frequency synchronization information reaches the time-frequency precision of the wideband system, the two ends may synchronously start the positioning procedure at a SUB-MAC layer of the wideband system. That is, the positioning end and the positioned end may perform positioning between the positioning end and the positioned end via the SUB-MAC layer of the wideband system.

503: The first device exchanges a positioning result with the second device via the narrowband system.

In some embodiments, SUB-MAC layers of wideband systems of the two ends perform ranging initiation and ranging response exchange, and after the SUB-MAC layer of the wideband system in the positioned end obtains a ranging and/or positioning result, the ranging and/or positioning result may be transmitted to the SUB-MAC layer of the narrowband system in the positioned end via the MAC layer of the positioned end. The two ends then interact with each other via the SUB-MAC layer of the narrowband system, to feed back the positioning result to the positioning end.

It should be understood that the positioning result is determined based on the ranging result.

Therefore, in this application, signaling interaction and fine synchronization are performed via the narrowband system, to obtain the time-frequency synchronization information, and after time-frequency synchronization precision is determined at MAC layers of the first device and the second device, ranging and/or positioning may be synchronously started at the SUB-MAC layers of the wideband systems of the two ends. In this way, in this application, when time-frequency synchronization interaction between the two ends is performed via the narrowband system and synchronization precision of the wideband system is reached, an area and power consumption of the wideband system can be greatly reduced without losing the time-frequency precision required by the wideband system for ranging/positioning.

The following describes a method procedure in this application by using an example in a connection-based positioning scenario, a non connection-based positioning scenario, and a positioning scenario based on one-to-many broadcast.

This application provides a connection positioning-based time-frequency synchronization method. In the method, first, a narrowband system of a first device initiates a broadcast and a connection, and coarse synchronization of time precision required for positioning is completed through connection and by improving a sampling rate (corresponding to a process in which coarse synchronization between the two ends is performed in a wideband system via the narrowband system in this application) (based on this precision, SUB-MAC used for positioning in the wideband system only needs to perform fine time-frequency synchronization). After the first device is connected to a second device, frequency offset compensation may be performed by using monophony, to reach a time-frequency precision requirement required for positioning. Then, the first device and the second device start ranging/positioning based on the time-frequency synchronization information, and a precise ranging result is transmitted through a data channel of the narrowband system.

As shown in FIG. 6, the method includes the following steps.

601: The first device sends a broadcast message to the second device via the narrowband system, where the broadcast message includes a connection, in the narrowband system, established between the first device and the second device.

In this embodiment of this application, an example in which the first device is a positioning end and the second device is a positioned end is used for description.

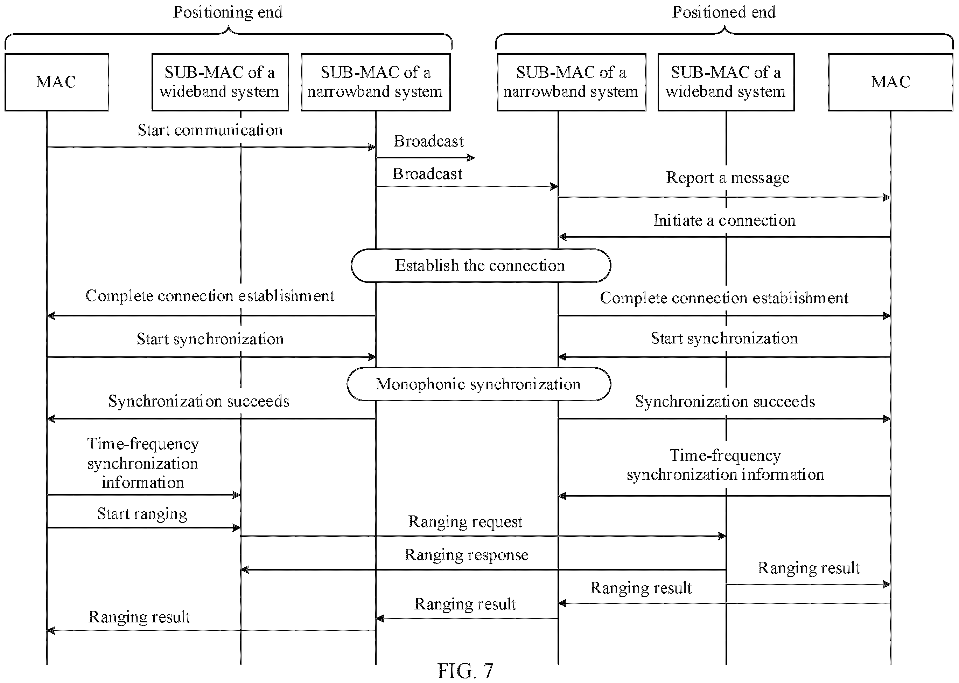

As shown in FIG. 7, for example, a procedure of step 601 may include the following steps.

When a MAC layer of the positioning end receives an indication of starting communication from an upper layer, the MAC layer of the positioning end may send the indication of starting communication to a SUB-MAC layer of the narrowband system in the positioning end. For example, the indication of starting communication includes information such as an address and/or an identifier of the positioned end.

The SUB-MAC layer of the narrowband system in the positioning end may send the broadcast message to at least one positioned end based on the indication of starting communication. The broadcast message includes, for example, parameters such as addresses of the positioning end and the positioned end, clock information for starting synchronization, an indication of whether encryption is performed, an indication of whether ranging is performed, and an indication of a method used for ranging/positioning.

After receiving the broadcast message, the SUB-MAC layer of the narrowband system in the positioned end may report the message to the MAC layer of the positioned end, and report the parameters in the broadcast message.

The MAC layer of the positioned end may initiate a connection request to the SUB-MAC layer of the narrowband system in the positioned end based on the parameters in the broadcast message.

The SUB-MAC layer of the narrowband system in the positioned end interacts with the SUB-MAC layer of the narrowband system in the positioning end, to establish a connection in the narrowband system between the positioning end and the positioned end.

When determining that connection establishment is completed, the SUB-MAC layer of the narrowband system in the positioning end may report a connection completion indication to the MAC layer of the positioning end. When determining that connection establishment is completed, the SUB-MAC layer of the narrowband system in the positioned end may report a connection completion indication to the MAC layer of the positioned end.

In this way, the connection between the positioning end and the positioned end in the narrowband system is successfully established.

602: The first device performs monophonic synchronization with the second device via the narrowband system, and obtains time-frequency synchronization information between the first device and the second device based on a monophonic synchronization result.

Refer to FIG. 7. A procedure of step 602 may include the following steps.

The MAC layer of the positioning end sends, based on the clock information for starting synchronization, the indication of starting synchronization to the SUB-MAC layer of the narrowband system in the positioning end, and the MAC layer of the positioned end sends, based on the clock information for starting synchronization, the indication of starting synchronization to the SUB-MAC layer of the narrowband system in the positioned end. A moment for starting synchronization may be, for example, agreed upon by the positioning end and the positioned end in a process of establishing the connection.

Both the positioning end and the positioned end can perform monophonic synchronization via the SUB-MAC layer of the narrowband system, to reach the time-frequency precision required for coarse synchronization of the wideband system. The monophonic synchronization process may be understood as a time-frequency synchronization and ranging method, that is, the positioning end and the positioned end perform synchronization based on a monophonic result. In some embodiments, coarse synchronization implemented by monophonic synchronization herein may be implemented after the positioning end and the positioned end are synchronized for a plurality of times. Time-frequency precision required for coarse synchronization may be, for example, at an ns level. It should be understood that time-frequency precision of coarse synchronization implemented by the positioning end and the positioned end is the same.

After monophonic synchronization is completed, the SUB-MAC layer of the narrowband system in the positioning end may send a synchronization success indication to the MAC layer of the positioning end, and the SUB-MAC layer of the narrowband system in the positioned end may send the synchronization success indication to the MAC layer of the positioned end. The synchronization success indication includes time-frequency synchronization information of the two ends, that is, time-frequency precision of coarse synchronization, denoted as the time-frequency synchronization information of coarse synchronization.

The MAC layer of the positioning end may send the time-frequency synchronization information of coarse synchronization (the time-frequency synchronization information shown in FIG. 7) to the SUB-MAC layer of the wideband system in the positioning end, and the MAC layer of the positioned end may also send the time-frequency synchronization information of coarse synchronization (the time-frequency synchronization information shown in FIG. 7) to the SUB-MAC layer of the wideband system in the positioned end, so that the positioning end and the positioned end continue, based on the time-frequency synchronization information of coarse synchronization, to perform time-frequency synchronization between the positioning end and the positioned end respectively via the SUB-MAC layer of the wideband system, to obtain time-frequency synchronization information of fine synchronization between the positioning end and the positioned end, and the two ends perform high-precision ranging based on the time-frequency synchronization information of fine synchronization, that is, start a ranging and/or positioning procedure.

In some embodiments, usually, at the SUB-MAC layers of the wideband systems of the two ends, the time-frequency synchronization information of coarse synchronization determined via the narrowband system meets a requirement of fine synchronization by default.

603: When the first device and the second device determine, at the MAC layer, that the time-frequency synchronization information reaches the time-frequency precision required by the wideband system, the first device and the second device synchronously start positioning on the second device via the wideband system.

In some embodiments, when the SUB-MAC layers of the wideband systems in the positioning end and the positioned end determine that the time-frequency synchronization information of coarse synchronization reaches the time-frequency synchronization requirement of fine synchronization, the SUB-MAC layer of the wideband system in the positioning end may send a fine synchronization success indication to the MAC layer of the positioning end, and the SUB-MAC layer of the wideband system in the positioned end may send the fine synchronization success indication to the MAC layer of the positioned end.

When the positioning end determines, at the MAC layer, that the time-frequency synchronization information of fine synchronization of the positioning end reaches the time-frequency precision required by the wideband system, the positioning end sends a ranging request to the positioned end via the wideband system at a moment for starting ranging/positioning. The positioning end receives a ranging response of the positioned end via the wideband system. The positioned end determines a ranging result and/or a positioning result based on the ranging request and the ranging response.

In some embodiments, when the positioned end determines, at the MAC layer, that the time-frequency synchronization information of fine synchronization of the positioned end reaches the time-frequency precision required by the wideband system, the positioned end sends a ranging request to the positioning end via the wideband system at a moment for starting ranging/positioning. The positioned end receives a ranging response of the positioning end via the wideband system.

In some embodiments, the positioning end and the positioned end may alternatively simultaneously determine, at the MAC layer, that the time-frequency synchronization information of fine synchronization reaches the time-frequency precision required by the wideband system. At a moment for starting ranging/positioning, the positioning end sends a ranging request to the positioned end via the wideband system, and the positioned end simultaneously sends a ranging request to the positioning end via the wideband system. That is, ranging processing can be started at the two ends.

For example, that the positioning end starts synchronization is used as an example. Refer to FIG. 7. A procedure of step 603 may include the following steps.

The SUB-MAC layer of the wideband system in both the positioning end and the positioned end may send a fine synchronization success indication to the MAC layer. When MAC layers of the two ends determine that the time-frequency synchronization information of fine synchronization reaches the time-frequency precision required by the wideband system, the MAC layer of the positioning end may perform interaction of a ranging start moment via the SUB-MAC layer of the narrowband system.

When the two ends determine the ranging start moment, the two ends may send the ranging start moment to the SUB-MAC layer of the wideband system via the SUB-MAC layer of the narrowband system. The ranging start moment may be understood as a ranging start indication.

When receiving the ranging start indication, the SUB-MAC layer of the wideband system in the positioning end may send, at a moment for starting ranging/positioning, a ranging request to the SUB-MAC layer of the wideband system in the positioned end via the SUB-MAC layer of the wideband system in the positioning end. In addition, the SUB-MAC layer of the wideband system in the positioned end may synchronously start ranging monitoring to monitor whether the ranging request is received. That the SUB-MAC layer of the wideband system in the positioning end sends a ranging request to the SUB-MAC layer of the wideband system in the positioned end may be specifically: The SUB-MAC layer of the wideband system in the positioning end first sends the ranging request to the SUB-MAC layer of the narrowband system in the positioning end via the MAC layer of the positioning end, the SUB-MAC layer of the narrowband system in the positioning end sends the ranging request to the MAC layer of the positioned end via the SUB-MAC layer of the narrowband system in the positioned end, and then the MAC layer of the positioned end sends the ranging request to the SUB-MAC layer of the wideband system in the positioned end. That is, the communication frame for ranging request is interacted between two ends via the SUB-MAC layer of the narrowband system.

When receiving the ranging request, the SUB-MAC layer of the wideband system in the positioned end sends a ranging response to the SUB-MAC layer of the wideband system in the positioning end. The ranging response herein is also similar to transmission of the ranging type, and needs to be transmitted to the SUB -MAC layer of the wideband system in the positioning end via the MAC layers of the two ends and the SUB-MAC layer of the narrowband system. Then, the SUB-MAC layer of the wideband system in the positioned end may determine the ranging result based on sending time at which the positioning end sends the ranging request, receiving time at which the positioned end receives the ranging request, sending time at which the positioned end sends the ranging response, and receiving time at which the positioning end receives the ranging response.

The receiving time at which the positioning end receives the ranging response may be sent to the SUB-MAC layer of the narrowband system in the positioned end via the SUB-MAC layer of the narrowband system in the positioning end, and then forwarded by the SUB-MAC layer of the narrowband system in the positioned end to the SUB-MAC layer of the wideband system in the positioned end via the MAC layer of the positioned end.

If the positioned end further needs to determine the positioning result of the positioned end, the positioning result may be further determined at the SUB-MAC layer of the wideband system based on the ranging result.

604: The first device exchanges a ranging and/or positioning result with the second device via the narrowband system.

In some embodiments, the positioned end obtains the ranging result and/or the positioning result. The positioning end receives, via the narrowband system, the ranging result and/or the positioning result sent by the positioned end.

For example, refer to FIG. 7. A procedure of step 604 may include the following steps.

After the SUB-MAC layer of the wideband system in the positioned end determines the ranging result and/or the positioning result, the SUB-MAC layer of the wideband system in the positioned end may send the ranging result and/or the positioning result to the MAC layer of the positioned end.

The MAC layer of the positioned end sends the ranging result and/or the positioning result to the SUB-MAC layer of the narrowband system in the positioned end.

The SUB-MAC layer of the narrowband system in the positioned end sends the ranging result and/or the positioning result to the SUB-MAC layer of the narrowband system in the positioning end.

The SUB-MAC layer of the narrowband system in the positioning end sends the ranging result and/or the positioning result to the MAC layer of the positioning end.

In this way, the positioning end may learn of positioning of the positioned end and/or a distance between the two ends.

Therefore, in this application, signaling interaction and fine synchronization are performed via the narrowband system, to obtain the time-frequency synchronization information, and after time-frequency synchronization precision is determined at the MAC layers of the positioning end and the positioned end, ranging and/or positioning may be synchronously started at the SUB-MAC layers of the wideband systems of the two ends. In this way, in this application, when time-frequency synchronization interaction between the two ends is performed via the narrowband system and synchronization precision of the wideband system is reached, an area and power consumption of the wideband system can be greatly reduced without losing the time-frequency precision required by the wideband system for ranging/positioning.

This application provides a non connection positioning-based time-frequency synchronization method. Similar to two end connection-based positioning, non connection-based positioning also provides time-frequency synchronization for a SUB-MAC layer for ranging (the SUB-MAC layer of the wideband system) via a SUB-MAC layer for communication (the SUB-MAC layer of the narrowband system), to implement high-precision positioning. A difference lies in that the time-frequency synchronization in non-connection mode is based on bidirectional broadcast.

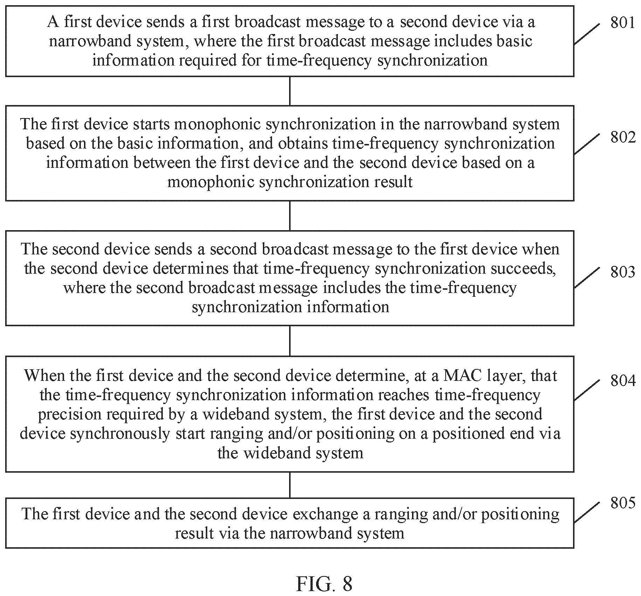

As shown in FIG. 8, the method includes the following steps.

801: A first device sends a first broadcast message to a second device via a narrowband system, where the first broadcast message includes basic information required for time-frequency synchronization.

In this embodiment of this application, an example in which the first device is a positioning end and the second device is a positioned end is used for description.

An implementation process of step 801 is similar to that of step 601, and a difference lies in that the first broadcast message herein may include a broadcast message and an extended broadcast message. The broadcast message indicates that time-frequency synchronization between the two ends is to be performed, and the extended broadcast message includes basic information required for synchronization between the two ends. The basic information includes, for example, parameters such as addresses of the positioning end and the positioned end, clock information for starting synchronization, an indication of whether encryption is performed, an indication of whether ranging is performed, and an indication of a method used for ranging/positioning.

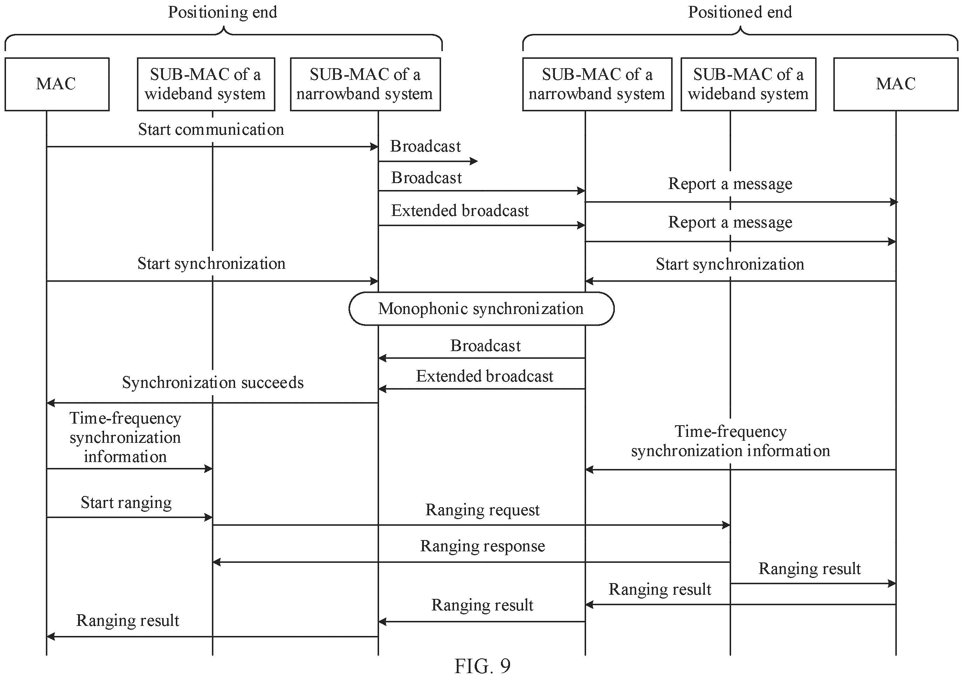

Refer to FIG. 9. A procedure of step 801 may include the following steps.

A MAC layer of the positioning end sends, to a SUB-MAC layer of the narrowband system in the positioning end, an indication of starting communication.

The SUB-MAC layer of the narrowband system in the positioning end sends the broadcast message and the extended broadcast message to a SUB-MAC layer of a narrowband system in the positioned end.

When receiving the broadcast message, the SUB-MAC layer of the narrowband system in the positioned end sends, to a MAC layer of the positioned end, a message indicating to start communication; and when receiving the extended broadcast message, the SUB-MAC layer of the narrowband system in the positioned end reports information in the extended broadcast message to the MAC layer of the positioned end.

802: The first device starts monophonic synchronization in the narrowband system based on the basic information, and obtains time-frequency synchronization information between the first device and the second device based on a monophonic synchronization result.

Refer to FIG. 9. A procedure of step 802 may include the following steps.

The MAC layer of the positioning end sends, based on the clock information for starting synchronization, the indication of starting synchronization to the SUB-MAC layer of the narrowband system in the positioning end, and the MAC layer of the positioned end sends, based on the clock information for starting synchronization, the indication of starting synchronization to the SUB-MAC layer of the narrowband system in the positioned end.

Both the positioning end and the positioned end can perform monophonic synchronization via the SUB-MAC layer of the narrowband system, to reach the time-frequency precision required for coarse synchronization of the wideband system.

When the positioned end determines that the time-frequency precision required for coarse synchronization of the wideband system is reached, the SUB-MAC layer of the narrowband system in the positioned end sends a synchronization success indication to the MAC layer of the positioned end. Herein, the synchronization success indication includes time-frequency synchronization information of coarse synchronization between the ends.

803: The second device sends a second broadcast message to the first device when the second device determines that time-frequency synchronization succeeds, where the second broadcast message includes the time-frequency synchronization information.

The second broadcast message may include a broadcast message and an extended broadcast message. Certainly, the broadcast message and the extended broadcast message in step 803 are different from the broadcast message and the extended broadcast message in step 801. The broadcast message in step 803 indicates that coarse synchronization succeeds, and the extended broadcast message carries time-frequency synchronization information of coarse synchronization of the positioned end and a ranging/positioning start moment.

Refer to FIG. 9. A procedure of step 803 may include the following steps.

The SUB-MAC layer of the narrowband system in the positioned end sends the broadcast message and the extended broadcast message to the SUB-MAC layer of the narrowband system in the positioning end.

When receiving the broadcast message and the extended broadcast, the SUB-MAC layer of the narrowband system in the positioning end determines that coarse synchronization between the positioned end and the positioning end succeeds, and sends the synchronization success indication to the MAC layer of the positioning end.

When the MAC layer of the positioned end receives the synchronization success indication, and the MAC layer of the positioning end also receives the synchronization success indication, that is, the two ends determine the time-frequency synchronization information of coarse synchronization.

The MAC layer of the positioning end may send the time-frequency synchronization information of coarse synchronization of the positioning end (the time-frequency synchronization information shown in FIG. 9) to a SUB-MAC layer of a wideband system in the positioning end, and the MAC layer of the positioned end may also send the time-frequency synchronization information of coarse synchronization (the time-frequency synchronization information shown in FIG. 9) to a SUB-MAC layer of a wideband system in the positioned end, so that the positioning end and the positioned end continue, based on the time-frequency synchronization information of coarse synchronization, to perform time-frequency synchronization between the positioning end and the positioned end respectively via the SUB-MAC layer of the wideband system, to obtain time-frequency synchronization information of fine synchronization between the positioning end and the positioned end, and the two ends perform high-precision ranging based on the time-frequency synchronization information of fine synchronization, that is, start a ranging and/or positioning procedure.

Herein, a process in which the two ends perform time-frequency synchronization respectively via the SUB-MAC layer of the wideband system may be understood as determining whether the time-frequency synchronization information of coarse synchronization reaches the time-frequency synchronization information of fine synchronization of the wideband system.

In some embodiments, usually, at the SUB-MAC layers of the wideband systems of the two ends, the time-frequency synchronization information of coarse synchronization determined via the narrowband system meets a requirement of fine synchronization by default.

804: When the first device and the second device determine, at the MAC layer, that the time-frequency synchronization information reaches the time-frequency precision required by the wideband system, the first device and the second device synchronously start ranging and/or positioning on the positioned end via the wideband system.

In some embodiments, when the SUB-MAC layers of the wideband systems in the positioning end and the positioned end determine that the time-frequency synchronization information of fine synchronization is reached, the SUB-MAC layer of the wideband system in the positioning end may send a fine synchronization success indication to the MAC layer of the positioning end, and the SUB-MAC layer of the wideband system in the positioned end may send the fine synchronization success indication to the MAC layer of the positioned end.

When the positioning end and the positioned end determine, at the MAC layer, that the time-frequency synchronization information of fine synchronization of the positioning end reaches the time-frequency precision required by the wideband system, the positioning end sends a ranging request to the positioned end via the wideband system at a moment for starting ranging/positioning. The positioning end receives a ranging response of the positioned end via the wideband system. The positioned end determines a ranging result and/or a positioning result based on the ranging request and the ranging response.

Certainly, the positioned end may alternatively initiate a ranging request, or the positioning end and the positioned end simultaneously initiate a ranging request. For details, refer to the description in step 603.

For example, refer to FIG. 9. For a specific procedure of step 804, refer to the description of step 603 in FIG. 7.

A difference lies in that the moment for starting ranging/positioning may be carried in the second broadcast message by the positioned end and agreed on.

805: The first device and the second device perform interaction of the ranging and/or positioning result via the narrowband system.

For a specific procedure of step 805, refer to the description of step 604 in FIG. 7.

Therefore, in this application, signaling interaction and fine synchronization are performed via the narrowband system, to obtain the time-frequency synchronization information, and after time-frequency synchronization precision is determined at the MAC layers of the positioning end and the positioned end, ranging and/or positioning may be synchronously started at the SUB-MAC layers of the wideband systems of the two ends. In this way, in this application, when time-frequency synchronization interaction between the two ends is performed via the narrowband system and synchronization precision of the wideband system is reached, an area and power consumption of the wideband system can be greatly reduced without losing the time-frequency precision required by the wideband system for ranging/positioning.

This application provides a non-connection positioning-based time-frequency synchronization method. A basic principle of broadcast-based one-to-many (one positioning end corresponds to a plurality of positioned ends) positioning is as follows: In non connection-based positioning, a one-to-many positioning method is equivalent to a one-to-one positioning procedure, except that a plurality of devices (the plurality of positioned ends) are used for concurrent synchronization and concurrent ranging. A difference lies in that, in a multi-device reply procedure, the multi-device reply is performed in sequence based on parameters in a broadcast sent by the positioning end.

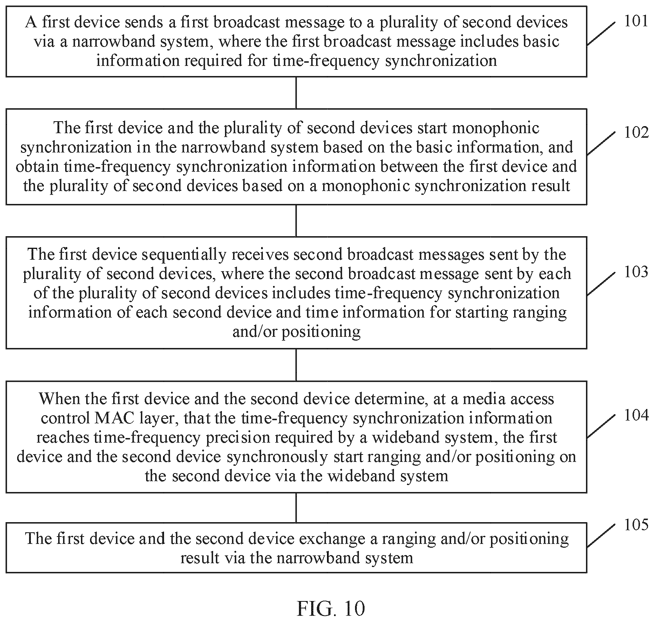

As shown in FIG. 10, the method includes the following steps.

101: A first device sends a first broadcast message to a plurality of second devices via the narrowband system, where the first broadcast message includes basic information required for time-frequency synchronization.

In this embodiment of this application, an example in which the first device is a positioning end and the second device is a positioned end is used for description.

It should be understood that, in step 101, the positioning end sends the first broadcast message to each of the plurality of positioned ends via the narrowband system, and the first broadcast messages received by the positioned ends are the same.

Similar to step 801, the first broadcast message received by each positioned end may include a broadcast message and an extended broadcast message. The broadcast message indicates that time-frequency synchronization between the two ends is to be performed, and the extended broadcast message includes basic information required for synchronization between the two ends. The basic information includes, for example, parameters such as addresses of the positioning end and the plurality of positioned ends, clock information for starting synchronization, an indication of whether encryption is performed, an indication of whether ranging is performed, and an indication of a method used for ranging/positioning.

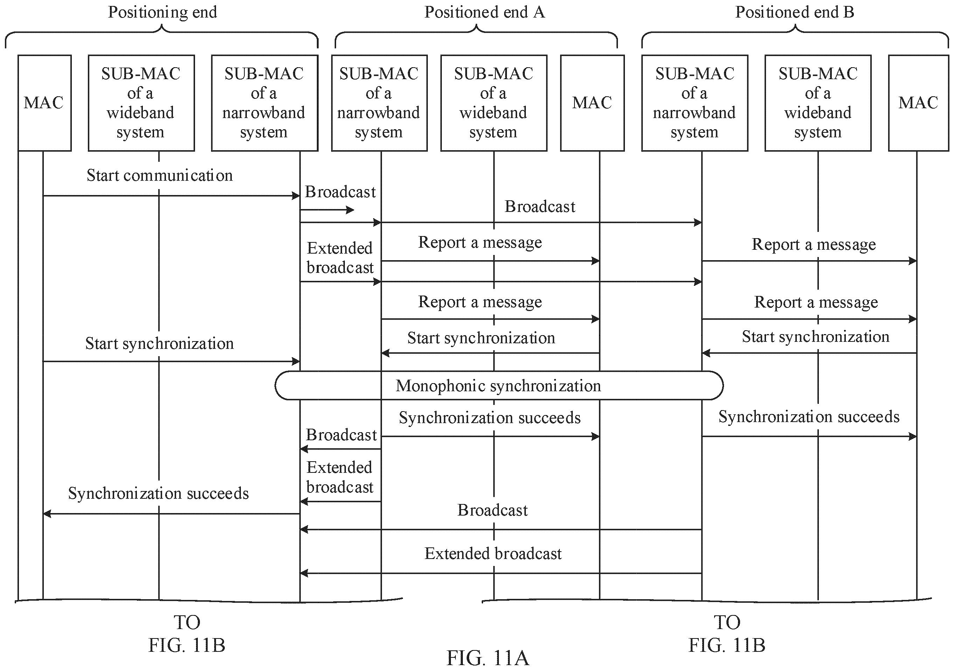

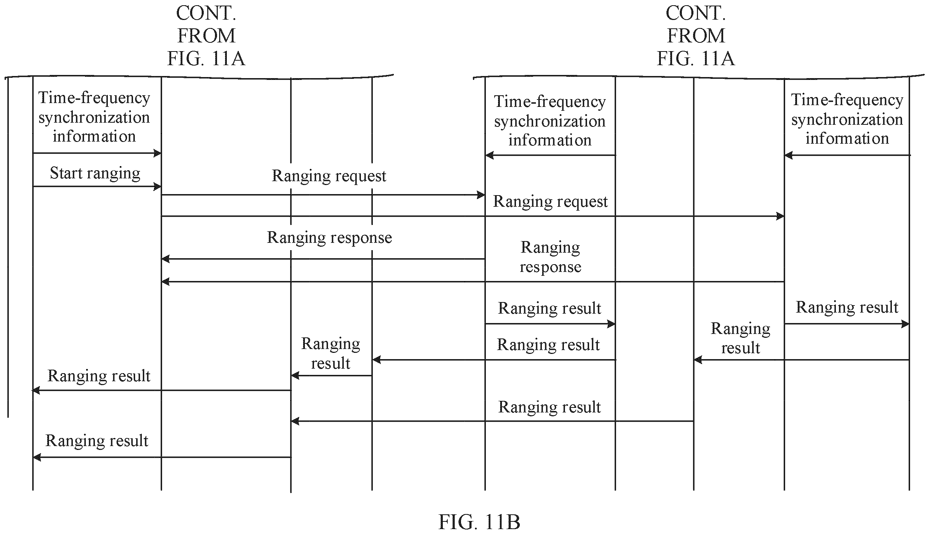

Refer to FIG. 11A and FIG. 11B. The positioned end including a positioned end A and a positioned end B is used as an example. A procedure of step 101 may include the following steps.

A MAC layer of the positioning end sends, to a SUB-MAC layer of the narrowband system in the positioning end, an indication of starting communication.

The SUB-MAC layer of the narrowband system in the positioning end sends the broadcast message to a SUB-MAC layer of a narrowband system in the positioned end A and to a SUB-MAC layer of a narrowband system in the positioned end B. The broadcast message indicates that time-frequency synchronization between the two ends is to be performed.

The SUB-MAC layer of the narrowband system in the positioned end A reports the message to a MAC layer of the positioned end A, to indicate that time-frequency synchronization between the two ends is to be performed. The SUB-MAC layer of the narrowband system in the positioned end B reports the message to a MAC layer of the positioned end B, to indicate that time-frequency synchronization between the two ends is to be performed.

The SUB-MAC layer of the narrowband system in the positioning end sends the extended broadcast message to the SUB-MAC layer of the narrowband system in the positioned end A and to the SUB-MAC layer of the narrowband system in the positioned end B.

The SUB-MAC layer of the narrowband system in the positioned end A reports the message to the MAC layer of the positioned end A, to indicate synchronization information in the extended broadcast message. The SUB-MAC layer of the narrowband system in the positioned end B reports the message to the MAC layer of the positioned end B, to indicate the synchronization information in the extended broadcast message.

102: The first device and the plurality of second devices start monophonic synchronization in the narrowband system based on the basic information, and obtain time-frequency synchronization information between the first device and the plurality of second devices based on a monophonic synchronization result.

Refer to FIG. 11A and FIG. 11B. A procedure of step 102 may include the following steps.

The MAC layer of the positioning end sends, based on the clock information for starting synchronization in the extended broadcast message, an indication of starting synchronization to the SUB-MAC layer of the narrowband system in the positioning end, the MAC layer of the positioned end A sends the indication of starting synchronization to the SUB-MAC layer of the narrowband system in the positioned end A, and the MAC layer of the positioned end B sends the indication of starting synchronization to the SUB-MAC layer of the narrowband system in the positioned end B.

The SUB-MAC layer of the narrowband system in the positioning end and the SUB-MAC layer of the narrowband system in the positioned end A perform monophonic synchronization based on the basic information, and the SUB-MAC layer of the narrowband system in the positioning end and the SUB-MAC layer of the narrowband system in the positioned end B perform monophonic synchronization based on the basic information.

The SUB-MAC layer of the narrowband system in the positioned end A sends a synchronization success indication to the MAC layer of the positioned end A, and the SUB-MAC layer of the narrowband system in the positioned end B sends the synchronization success indication to the MAC layer of the positioned end B.

In this case, the synchronization success indication is equivalent to indicating that the positioned end A and the positioned end B have reached time-frequency precision required for coarse synchronization of a wideband system, that is, carrying time-frequency synchronization information of coarse synchronization between the two ends.

103: The first device sequentially receives second broadcast messages sent by the plurality of second devices, where the second broadcast message sent by each of the plurality of second devices includes time-frequency synchronization information of each second device and time information for starting ranging and/or positioning.

When there are the plurality of positioned ends, the plurality of positioned ends further need to determine and interact with the positioning end about the monophonic synchronization result. The second broadcast message sent by each positioned end may include a broadcast message and an extended broadcast message. The broadcast message in step 103 may indicate that coarse synchronization succeeds, and the extended broadcast message may include the time-frequency synchronization information of coarse synchronization of the positioned end and a ranging/positioning start moment corresponding to the positioned end.

Therefore, a procedure of step 103 may include the following steps.

The SUB-MAC layer of the narrowband system in the positioned end A sends a broadcast message and an extended broadcast message to the SUB-MAC layer of the narrowband system in the positioning end, and the SUB-MAC layer of the narrowband system in the positioning end sends an indication of successful coarse synchronization between the positioned end A and the positioning end to the MAC layer of the positioning end.

The SUB-MAC layer of the narrowband system in the positioned end B sends a broadcast message and an extended broadcast message to the SUB-MAC layer of the narrowband system in the positioning end, and the SUB-MAC layer of the narrowband system in the positioning end sends an indication of successful coarse synchronization between the positioned end B and the positioning end to the MAC layer of the positioning end.

Herein, the positioned end A and the positioned end B send the broadcast message and the extended broadcast message to the positioning end in sequence. A time sequence corresponding to being in sequence herein may be carried in the extended broadcast message in the first broadcast message sent by the positioning end.

In addition to the time-frequency synchronization information, the extended broadcast message in the second broadcast message sent by the positioned end A further includes time information used by the positioned end A to start ranging and/or positioning.

In addition to the time-frequency synchronization information, the extended broadcast message in the second broadcast message sent by the positioned end B further includes time information used by the positioned end B to start ranging and/or positioning.

After the positioning end determines the time-frequency synchronization information of coarse synchronization of the plurality of positioned ends, the positioning end and the plurality of positioned ends may continue to perform fine synchronization.

For example, when the MAC layer of the positioning end sends the time-frequency synchronization information of coarse synchronization (the time-frequency synchronization information in FIG. 9) to a SUB-MAC layer of the wideband system in the positioning end, the MAC layer of the positioned end A may also send the time-frequency synchronization information of coarse synchronization (the time-frequency synchronization information in FIG. 9) to a SUB-MAC layer of the wideband system in the positioned end A, and the MAC layer of the positioned end B may also send the time-frequency synchronization information of coarse synchronization (the time-frequency synchronization information in FIG. 9) to a SUB-MAC layer of the wideband system in the positioned end B, so that the positioning end, the positioned end A, and the positioned end B continue, based on the time-frequency synchronization information of coarse synchronization, to perform time-frequency synchronization between the positioning end, the positioned end A, and the positioned end B respectively via the SUB-MAC layer of the wideband system, to obtain time-frequency synchronization information of fine synchronization between the positioning end and the plurality of positioned ends, and the positioning end and the plurality of positioned ends perform high-precision ranging based on the time-frequency synchronization information of fine synchronization, that is, start a ranging and/or positioning procedure.

Herein, the process of performing time-frequency synchronization by the positioning end, the positioned end A, and the positioned end B respectively via the SUB-MAC layer of the wideband system may be understood as determining whether the time-frequency synchronization information of coarse synchronization reaches the time-frequency synchronization information of fine synchronization of the wideband system.

In some embodiments, usually, at the SUB-MAC layers of the wideband systems of the positioning end and the plurality of positioned ends, the time-frequency synchronization information of coarse synchronization determined via the narrowband system meets a requirement of fine synchronization by default.

104: When the first device and the second device determine, at the media access control MAC layer, that the time-frequency synchronization information reaches the time-frequency precision required by the wideband system, the first device and the second device synchronously start ranging and/or positioning on the second device via the wideband system.

In some embodiments, when the SUB-MAC layers of the wideband systems in the positioning end and the plurality of positioned ends determine the time-frequency synchronization information of fine synchronization is reached, the SUB-MAC layer of the wideband system in the positioning end may send a fine synchronization success indication to the MAC layer of the positioning end, and the SUB-MAC layers of the wideband systems in the plurality of positioned ends send fine synchronization success indications to respective MAC layers of the plurality of positioned ends.

Then, when the MAC layer of the positioning end receives the fine synchronization success indication sent by the SUB-MAC layer of the wideband system in the positioning end, it is equivalent to that the MAC layer determines that the time-frequency synchronization information of fine synchronization of the positioning end reaches the time-frequency precision required by the wideband system. In this way, the positioning end may separately send a ranging request to the plurality of positioned ends via the wideband system at a moment for starting ranging/positioning. The positioning end receives ranging responses of the plurality of positioned ends via the wideband system. The plurality of positioned ends separately determine a ranging result and/or a positioning result based on the ranging request and the corresponding ranging response.

Refer to FIG. 11A and FIG. 11B. A procedure of step 104 may include the following steps.

The MAC layer of the positioning end sends, to the SUB-MAC layer of the wideband system in the positioning end, an indication of starting ranging.

The SUB-MAC layer of the wideband system in the positioning end sends, at a moment indicated by the time information for starting ranging and/or positioning and corresponding to the positioned end A, a ranging request to the SUB-MAC layer of the wideband system in the positioned end A; and the SUB-MAC layer of the wideband system in the positioning end sends, at a moment indicated by the time information for starting ranging and/or positioning and corresponding to the positioning end B, a ranging request to the SUB-MAC layer of the wideband system in the positioned end B; and the ranging request in this scenario is also similar to the implementation process in step 603, and an intermediate forwarding process also needs to be performed via the MAC layers and the SUB-MAC layers of the narrowband systems of the two ends.

The SUB-MAC layer of the wideband system in the positioned end A sends a ranging response of the positioned end A to the SUB-MAC of the wideband system in the positioning end; and the SUB-MAC layer of the wideband system in the positioned end B sends a ranging response of the positioned end B to the SUB-MAC of the wideband system in the positioning end. The ranging response in this scenario is similar to the implementation process in step 603, and an intermediate forwarding process also needs to be performed via the MAC layers and the SUB-MAC layers of the narrowband systems of the two ends.

The SUB-MAC layer of the wideband system in the positioned end A determines a ranging result and/or a positioning result between the positioned end A and the positioning end, and sends the ranging result and/or the positioning result corresponding to the positioned end A to the MAC layer of the positioned end A. For details, refer to the description in step 603.

The SUB-MAC layer of the wideband system in the positioned end B determines a ranging result and/or a positioning result between the positioned end B and the positioning end, and sends the ranging result and/or the positioning result corresponding to the positioned end B to the MAC layer of the positioned end B. For details, refer to the description in step 603.

105: The first device and the second device perform interaction of the ranging and/or positioning result via the narrowband system.

Refer to FIG. 11A and FIG. 11B. A procedure of step 105 includes the following steps.

The MAC layer of the positioned end A sends, to the SUB-MAC layer of the narrowband system in the positioned end A, the ranging result and/or the positioning result corresponding to the positioned end A. The SUB-MAC layer of the narrowband system in the positioned end A sends, to the SUB-MAC layer of the narrowband system in the positioning end, the ranging result and/or the positioning result corresponding to the positioned end A. The SUB-MAC layer of the narrowband system in the positioning end sends, to the MAC layer of the positioning end, the ranging result and/or the positioning result corresponding to the positioned end A.

The MAC layer of the positioned end B sends, to the SUB-MAC layer of the narrowband system in the positioned end B, the ranging result and/or the positioning result corresponding to the positioned end B. The SUB-MAC layer of the narrowband system in the positioned end B sends, to the SUB-MAC layer of the narrowband system in the positioning end, the ranging result and/or the positioning result corresponding to the positioned end B. The SUB-MAC layer of the narrowband system in the positioning end sends, to the MAC layer of the positioning end, the ranging result and/or the positioning result corresponding to the positioned end B.

Therefore, in this application, when one positioning end corresponds to the plurality of positioning ends, signaling interaction and fine synchronization may also be performed via the narrowband system, to obtain the time-frequency synchronization information, and after time-frequency synchronization precision is determined at the MAC layers of the positioning end and the positioned end, ranging and/or positioning may be synchronously started at the SUB-MAC layers of the wideband systems of the two ends. In this way, in this application, when time-frequency synchronization interaction between the two ends is performed via the narrowband system and synchronization precision of the wideband system is reached, an area and power consumption of the wideband system can be greatly reduced without losing the time-frequency precision required by the wideband system for ranging/positioning.

That is, in this application, costs and power consumption of wideband high-precision positioning can be greatly reduced, that is, functions such as discovery and synchronization of the wideband system are tailored, and are performed by the narrowband system. However, these functions occupy a large area of CBB of the wideband system and have high power consumption. For example, based on us-level synchronous startup, the BLE uses 32 MHz sampling, and the UWB uses 1 GHz sampling, and both occupy large areas and have high power consumption. In this application, communication and high-precision synchronous startup are performed via the narrowband system, and power consumption of the positioning end and the positioned end is greatly reduced.

In addition, based on this application, this application may be further used to perform many-to-many searching, discovery, and connection processes and the like between the positioning end and the positioned end through another new low power consumption path, to complete time-frequency synchronization of a plurality of UWB groups (each UWB group includes one positioning end and one positioned end).

It may be understood that, to implement the foregoing functions, the positioning device includes a corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in this embodiment is an example and is merely logical function division. In actual implementation, there may be another division manner.

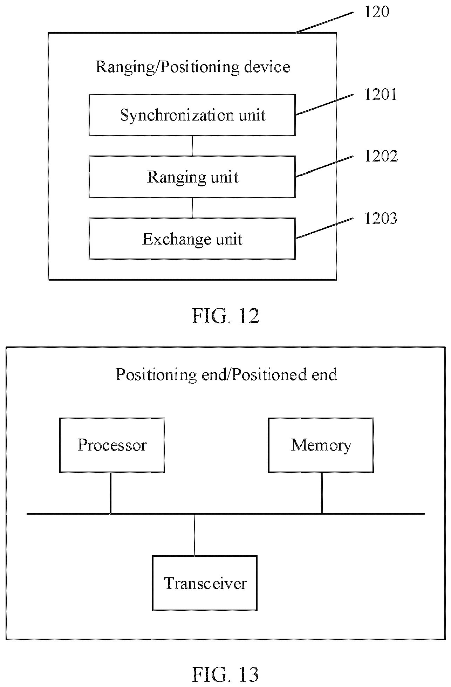

In a case in which each function module is obtained through division based on each corresponding function, FIG. 12 is a diagram of a possible composition of the first device or the second device in the foregoing embodiments. As shown in FIG. 12, when the first device or the second device is a ranging/positioning device, the ranging/positioning device 120 may include a synchronization unit 1201, a ranging unit 1202, and an exchange unit 1203.

The synchronization unit 1201 may be configured to support the ranging/positioning device 120 in performing step 501, step 601, step 602, step 801, step 802, step 803, step 101, step 102, step 103, and the like, and/or another process of the technology described in this specification.

The ranging unit 1202 may be configured to support the ranging/positioning device 120 in performing step 502, step 603, step 804, step 104, and the like, and/or another process of the technology described in this specification.

The exchange unit 1203 may be configured to support the ranging/positioning device 120 in performing step 503, step 604, step 805, step 105, and the like, and/or another process of the technology described in this specification.

It should be noted that all related content of the steps in the foregoing method embodiments may be cited in function description of corresponding functional modules. Details are not described herein again.

The ranging/positioning device 120 provided in this embodiment is configured to perform the time frequency synchronization-based positioning method, and therefore can achieve the same effect as the foregoing implementation methods.

When an integrated unit is used, the ranging/positioning device 120 may include a processing module, a storage module, and a communication module. The processing module may be configured to control and manage actions of the ranging/positioning device 120. For example, the processing module may be configured to support the ranging/positioning device 120 in performing the steps performed by the synchronization unit 1201, the ranging unit 1202, and the exchange unit 1203. The storage module may be configured to support the ranging/positioning device 120 in storing program code, data, and the like. The communication module may be configured to support communication between the ranging/positioning device 120 and another device. For example, when the ranging/positioning device 120 is a positioning end, the ranging/positioning device 120 communicates with a positioned end, or when the ranging/positioning device 120 is a positioned end, the ranging/positioning device 120 communicates with a positioning end.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processing (digital signal processing, DSP) and a microprocessor. The storage module may be a memory. The communication module may be specifically a device that interacts with another electronic device, such as a radio frequency circuit, a Bluetooth chip, or a Wi-Fi chip.

In an embodiment, when the processing module is a processor, the storage module is a memory, and the communication module is a transceiver, the ranging/positioning device in this embodiment may be a positioning end/positioned end having a structure shown in FIG. 13.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the time frequency synchronization-based positioning method in the foregoing embodiments.

An embodiment of this application further provides a computer storage medium. The computer storage medium stores computer instructions. When the computer instructions are run on an electronic device, the electronic device is enabled to perform the foregoing related method steps, to implement the time frequency synchronization-based positioning method in the foregoing embodiments.

An embodiment of this application further provides a computer program product. When the computer program product runs on a computer, the computer is enabled to perform the foregoing related steps, to implement the time frequency synchronization-based positioning method performed by the electronic device in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the time frequency synchronization-based positioning method performed by the electronic device in the foregoing method embodiments.

The electronic device, the computer storage medium, the computer program product, or the chip provided in this embodiment is configured to perform the corresponding method provided above. Therefore, for beneficial effect that can be achieved, refer to the beneficial effect of the corresponding method provided above. Details are not described herein again.

Another embodiment of this application provides a system. The system may include the at least one positioning end and the at least one to-be-positioned end, and may be configured to implement the time frequency synchronization-based positioning method.

Based on the foregoing descriptions of the implementations, a person skilled in the art may understand that for the purpose of convenient and brief description, division into the foregoing functional modules is merely used as an example for descriptions. During actual application, the foregoing functions can be allocated to different functional modules for implementation based on a requirement, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiments are merely examples. For example, the division into modules or units is merely logical function division, and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may be one or more physical units, may be located in one place, or may be distributed on different places. A part or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A time frequency synchronization-based positioning method, comprising:
completing, by a first device, time-frequency synchronization with a second device via a narrowband system, to obtain time-frequency synchronization information;
performing, by the first device, positioning between the first device and the second device via a wideband system when the first device determines, at a media access control MAC layer, that the time-frequency synchronization information reaches time-frequency precision required by the wideband system; and
exchanging, by the first device, a positioning result with the second device via the narrowband system.

2. The method according to claim 1, wherein the completing, by a first device, time-frequency synchronization with a second device via a narrowband system, to obtain time-frequency synchronization information comprises:
sending, by the first device, a broadcast message to the second device via the narrowband system, wherein the broadcast message comprises a connection, in the narrowband system, established between the first device and the second device; and
performing, by the first device, monophonic synchronization with the second device via the narrowband system, to obtain time-frequency synchronization information of coarse synchronization between the first device and the second device.

3. The method according to claim 1, wherein the completing, by a first device, time-frequency synchronization with a second device via a narrowband system, to obtain time-frequency synchronization information comprises:
sending, by the first device, a first broadcast message to the second device via the narrowband system, wherein the first broadcast message comprises basic information required for time-frequency synchronization;
starting, by the first device, monophonic synchronization in the narrowband system based on the basic information, to obtain time-frequency synchronization information of coarse synchronization between the first device and the second device; and
receiving, by the first device, a second broadcast message sent by the second device, wherein the second broadcast message comprises time-frequency synchronization information of coarse synchronization of the second device.

4. The method according to claim 1, wherein the completing, by a first device, time-frequency synchronization with a second device via a narrowband system, to obtain time-frequency synchronization information comprises:
sending, by the first device, a first broadcast message to a plurality of second devices via the narrowband system, wherein the first broadcast message comprises basic information required for time-frequency synchronization;
starting, by the first device, monophonic synchronization in the narrowband system based on the basic information, to complete time-frequency synchronization, and obtain time-frequency synchronization information of coarse synchronization between the first device and the second devices; and
sequentially receiving, by the first device, second broadcast messages sent by the plurality of second devices, wherein the second broadcast message sent by each of the plurality of second devices comprises time-frequency synchronization information of coarse synchronization of the second device.

5. The method according to any one of claims 2 to 4, wherein before the first device determines, at the media access control MAC layer, that the time-frequency synchronization information reaches the time-frequency precision required by the wideband system, the method further comprises:
continuing, by the first device based on the time-frequency synchronization information of coarse synchronization, to perform time-frequency synchronization with the second device via the wideband system, to obtain time-frequency synchronization information of fine synchronization between the first device and the second device.

6. The method according to claim 5, wherein both the first device and the second device comprise the MAC layer, a SUB-MAC layer of the wideband system, and a SUB-MAC layer of the narrowband system; and
the completing, by a first device, time-frequency synchronization with a second device via a narrowband system comprises:
completing, by the first device, time-frequency synchronization with the second device via the SUB-MAC layer of the narrowband system.

7. The method according to claim 6, wherein the performing, by the first device, positioning between the first device and the second device via a wideband system when the first device determines, at a media access control MAC layer, that the time-frequency synchronization information reaches time-frequency precision required by the wideband system comprises:
when the first device determines, at the MAC layer, that the time-frequency synchronization information of fine synchronization reaches the time-frequency precision required by the wideband system, at a moment for starting positioning, sending, by the SUB-MAC layer of the wideband system in the first device, a ranging request to the SUB-MAC layer of the wideband system in the second device, wherein the ranging request is used to request the SUB-MAC layer of the wideband system in the second device to perform positioning; and
receiving, by the SUB-MAC layer of the wideband system in the first device, a ranging response of the SUB-MAC layer of the wideband system in the second device.

8. The method according to claim 7, wherein the exchanging, by the first device, a positioning result with the second device via the narrowband system comprises:
receiving, by the SUB-MAC layer of the narrowband system in the first device, the positioning result sent by the SUB-MAC layer of the narrowband system in the second device; and
sending, by the SUB-MAC layer of the narrowband system in the first device, the positioning result to the MAC layer of the first device.

9. A positioning apparatus, wherein the positioning apparatus is used in a first device, and the positioning apparatus comprises:
a synchronization unit, configured to complete time-frequency synchronization with a second device via a narrowband system, to obtain time-frequency synchronization information;
a ranging unit, configured to: when it is determined, at a media access control MAC layer, that the time-frequency synchronization information reaches time-frequency precision required by a wideband system, perform positioning between the first device and the second device via the wideband system; and
an exchange unit, configured to exchange a positioning result with the second device via the narrowband system.

10. The positioning apparatus according to claim 9, wherein the synchronization unit is configured to:
send a broadcast message to the second device via the narrowband system, wherein the broadcast message comprises a connection to the second device established in the narrowband system; and
perform monophonic synchronization with the narrowband system of the second device, to obtain time-frequency synchronization information of coarse synchronization between the first device and the second device.

11. The positioning apparatus according to claim 9, wherein the synchronization unit is configured to:
send a first broadcast message to the second device via the narrowband system, wherein the first broadcast message comprises basic information required for time-frequency synchronization;
start, in the narrowband system, monophonic synchronization with the second device based on the basic information, to obtain time-frequency synchronization information of coarse synchronization between the first device and the second device; and
receive a second broadcast message sent by the second device, wherein the second broadcast message comprises time-frequency synchronization information of coarse synchronization of the second device.

12. The positioning apparatus according to claim 9, wherein the synchronization unit is configured to:
send a first broadcast message to a plurality of second devices via the narrowband system, wherein the first broadcast message comprises basic information required for time-frequency synchronization;
start, in the narrowband system, monophonic synchronization with the plurality of second devices based on the basic information, to complete time-frequency synchronization, and obtain time-frequency synchronization information of coarse synchronization between the first device and the plurality of second devices; and
sequentially receive, in the narrowband system, second broadcast messages sent by the plurality of second devices, wherein the second broadcast message sent by each of the plurality of second devices comprises time-frequency synchronization information of coarse synchronization of the second device.

13. The positioning apparatus according to any one of claims 10 to 12, wherein the synchronization unit is further configured to:
continue, based on the time-frequency synchronization information of coarse synchronization, to perform time-frequency synchronization with the second device via the wideband system, to obtain time-frequency synchronization information of fine synchronization between the first device and the second device.

14. The positioning apparatus according to claim 13, wherein both the first device and the second device comprise the MAC layer, a SUB-MAC layer of the wideband system, and a SUB-MAC layer of the narrowband system; and
the synchronization unit is configured to complete time-frequency synchronization with the second device via the SUB-MAC layer of the narrowband system.

15. The positioning apparatus according to claim 14, wherein
the ranging unit is configured to:
when it is determined, at the MAC layer, that the time-frequency synchronization information of fine synchronization reaches the time-frequency precision required by the wideband system, at a moment for starting positioning, send, at the SUB-MAC layer of the wideband system, a ranging request to the SUB-MAC layer of the wideband system in the second device, wherein the ranging request is used to request the SUB-MAC layer of the wideband system in the second device to perform positioning; and
receive, at the SUB-MAC layer of the wideband system, a ranging response of the SUB-MAC layer of the wideband system in the second device.

16. The positioning apparatus according to claim 15, wherein the exchange unit is configured to:
receive, at the SUB-MAC layer of the narrowband system, the positioning result sent by the SUB-MAC layer of the narrowband system in the second device; and
send, at the SUB-MAC layer of the narrowband system, the positioning result to the MAC layer of the first device.

17. A computer-readable storage medium, comprising computer instructions, wherein when the computer instructions are run on an electronic device, the electronic device is enabled to perform the method according to any one of claims 1 to 8.
